# EUROPÄISCHE PATENTSCHRIFT

(11) **EP 0 542 182 B1**
(45) Veröffentlichungstag und Bekanntmachung des Hinweises auf die Patenterteilung: **26.02.1997**
(21) Anmeldenummer: 92119174.8
(22) Anmeldetag: 10.11.1992
(51) Int. Cl.: B32B 27/08

(54) **Thermoplastische Mehrschichtverbunde**
Thermoplastic laminate
Stratifié thermoplastique

(30) Priorität: 14.11.1991 DE 4137434; 06.03.1992 DE 4207125
(43) Veröffentlichungstag der Anmeldung: 19.05.1993
(73) Patentinhaber: HÜLS AKTIENGESELLSCHAFT, 45764 Marl (DE)
(72) Erfinder: Mügge, Joachim, Dr., W-4358 Haltern (DE); Röber, Stefan, Dr., W-4370 Marl (DE); Jadamus, Hans, Dr., W-4370 Marl (DE)

(56) Entgegenhaltungen:
- EP-A- 0 206 689
- FR-A- 2 207 804
- US-A- 4 423 185
- US-A- 4 800 129

## Beschreibung

Gegenstand der Erfindung sind thermoplastische Mehrschichtverbunde.

Polyamide bzw. Polyester sind für eine Reihe von Anwendungen ungeeignet.

Polyamide sind beispielsweise nicht witterungsbeständig, da sie unter Belichtung altern sowie Luftfeuchtigkeit aufnehmen. Dies führt zu Verfärbung, Verschlechterung der mechanischen Eigenschaften und Verzugserscheinungen. Obwohl Polyamide gute mechanische Eigenschaften, insbesondere gute Zähigkeit, aufweisen, haben sie eine schlechte Sperrwirkung; so können polare Substanzen leicht durch Polyamide migrieren. Dies ist beispielsweise bei Kraftstoffleitungen, in denen alkoholhaltiger Kraftstoff gefördert wird, äußerst nachteilig.

Polyester sind im allgemeinen gut witterungsbeständig und besitzen eine ausgezeichnete Sperrwirkung sowohl gegenüber polaren als auch unpolaren Medien. Sie sind jedoch in der Regel schlagempfindlich. Insbesondere die Kerbschlagzähigkeit ist nicht ausreichend. Deshalb können Polyester in vielen Fällen, in denen Eigenschaften wie ausgezeichnete Sperrwirkung, hohe Temperaturbeständigkeit und gute Zähigkeit erwünscht sind, nicht verwendet werden.

In DE-PS 38 27 092 wird ein Mehrschichtrohr beschrieben, das von innen nach außen Schichten aus Polyamid, Polyvinylalkohol, Polyamid und Polyester aufweist. Der Polyester wird hierbei nur in einer dünnen Außenschicht eingesetzt, um so eine höhere Kurzzeitwärmeformbeständigkeit zu erreichen. Es ist allerdings dem Fachmann bekannt, daß die weitaus meisten Polymere, so auch Polyamide und Polyester, miteinander unverträglich sind, weshalb bei der Herstellung von Mehrschichtverbunden keine Anhaftung zwischen den Laminatschichten erreicht wird. Ein kraftschlüssiger Verbund zwischen den einzelnen Polymerschichten ist aber bei technischen Anwendungen unbedingt erforderlich.

Aus EP-A-287 839 sind Mehrschichtverbunde aus besonderen Polyamidmischungen und verschiedenen anderen Thermoplasten, wie beispielsweise Polyethylenterephthalat, bekannt. Dort wird, um die unverzichtbare Haftung zwischen den beiden Schichten zu erzielen, ein Haftvermittler zwischen die Laminatschichten eingebracht. Als geeignete Haftvermittler werden funktionalisierte Polyolefine, funktionalisierte Ethylen/Vinylacetat-Copolymere, Ethylen/Acrylat-Copolymere, Ionomere, Polyalkylenoxid/Polyester-Blockcopolymere, Derivate von Carboxymethylcellulose sowie Blends dieser Polymeren mit Polyolefinen angegeben.

Es hat sich nun herausgestellt, daß diese Haftvermittler insbesondere im System Polyamid/Polyester keinen kraftschlüssigen Verbund ergeben. In den Fällen, in denen ein gewisser Kraftschluß erzielt werden kann, geht dieser beim Erwärmen oder bei Einwirkung von Lösemitteln verloren, da die Haftvermittler nicht ausreichend wärmeform- und lösemittelbeständig sind. Zudem versagen derartige Verbunde bei Scherbelastung durch kalten Fluß des Haftvermittlers.

Aufgabe der vorliegenden Erfindung war es, einen lösemittel- und temperaturbeständigen Verbund zwischen Polyester und Polyamid zu schaffen, der unempfindlich gegenüber Scherbeanspruchung ist und gute mechanische Eigenschaften besitzt. Insbesondere soll eine starke Kohäsion an den Phasengrenzflächen erzielt werden.

Diese Aufgabe wird gelöst durch thermoplastische Mehrschichtverbunde enthaltend
I. mindestens eine Schicht einer Formmasse auf Basis von Polyamid
   und
II. mindestens eine Schicht einer Formmasse auf Basis eines Gemisches aus
   a. 98 bis 60 Gew.-% eines linearen, kristallinen Polyesters
      und
   b. 2 bis 40 Gew.-% einer Epoxigruppen aufweisenden Verbindung
   wobei die der Komponente II. b. entstammenden Epoxigruppen in der Komponente II. in einer Konzentration zwischen 4 und 1000 mmol/kg enthalten sind,
und eine gute Haftung zwischen den Schichten vorliegt.

Die Komponente II. setzt sich zusammen aus 98 bis 60, vorzugsweise 98 bis >70, und insbesondere aus 98 bis 85 Gew.-% an Komponente II. a. und 2 bis 40, vorzugsweise 2 bis <30, und insbesondere 2 bis 15 Gew.-% an Komponente II. b. Die der Komponente II. b. entstammenden Epoxigruppen sind in der Komponente II. in einer Konzentration zwischen 10 und 1 000 mmol/kg, vorzugsweise zwischen 80 und 500 mmol/kg vorhanden.

Eine besondere Ausführungsform der Erfindung stellt ein thermoplastischer Mehrschichtverbund dar, enthaltend
I. eine Schicht einer Formmasse auf Basis von Polyamid, wobei mindestens 50 % aller im Polyamid vorhandenen Endgruppen Aminoendgruppen darstellen und die Aminoendgruppenkonzentration in der Komponente I. im Bereich von 30 bis 130 mmol/kg liegt,
und
II. eine Schicht einer Formmasse auf Basis eines Gemisches aus
   a. 95 bis 60 Gew.-% eines linearen, kristallinen Polyesters
      und
   b. 5 bis 40 Gew.-% eines Epoxigruppen aufweisenden Polymeren,
   wobei die der Komponente II. b. entstammenden Epoxigruppen in der Komponente II. in einer Konzentration zwischen 4 und 95 mmol/kg enthalten sind,
und die beiden Schichten kraftschlüssig miteinander verbunden sind.

In dieser besonderen Ausführungsform sind in der Komponente I. vorzugsweise 70 % aller im Polyamid vorhandenen Endgruppen Aminoendgruppen; die Aminoendgruppenkonzentration liegt vorzugsweise im Bereich von 60 bis 110 mmol/kg.

Die Komponente II. bei dieser Ausführungsform besteht vorzugsweise aus einer thermoplastischen Formmasse auf Basis eines Gemisches aus
a. 95 bis >70 Gew.-%, insbesondere 90 - 80 Gew.-%, eines linearen, kristallinen Polyesters
   und
b. 5 bis <30 Gew.-%, insbesondere 10 - 20 Gew.-%, eines Epoxigruppen aufweisenden Polymeren.

In dieser bevorzugten Ausführungsform sind die der Komponente II. b. entstammenden Epoxigruppen in der Komponente II. insbesondere in einer Konzentration im Bereich von 6 bis 75 mmol/kg enthalten.

Als Polyamide kommen in erster Linie aliphatische Homo- und Copolykondensate in Frage. Als Beispiel seien die 4.6-; 6.6-; 6.12-; 8.10-; 10.10-Polyamide o. ä. genannt. Bevorzugt werden 6-; 10.12-; 11-; 12-sowie 12.12-Polyamide. (Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer α,ω-Aminocarbonsäure bzw. von dem davon abgeleitetem Lactam ausgegangen worden ist - H. Domininghaus, **Die Kunststoffe und ihre Eigenschaften**, Seite 272, VDI-Verlag (1976).)

Sofern Copolyamide verwendet werden, können diese z. B. Adipinsäure, Sebacinsäure, Korksäure, Isophthalsäure, Terephthalsäure als Cosäure bzw. Bis(4-aminocyclohexyl)-methan, Trimethylhexamethylendiamin, Hexamethylendiamin o. ä.als Codiamin enthalten.

Die Herstellung dieser Polyamide ist bekannt (z. B. D. B. Jacobs, J. Zimmermann, **Polymerization Processes**, S. 424-67; Interscience Publishers, New York (1977); DE-AS 21 52 194).

Ebenfalls geeignet als Polyamide sind gemischte aliphatisch/aromatische Polykondensate wie sie z. B. in den US-PSS 2 071 250; 2 071 251; 2 130 523; 2 130 948; 2 241 322; 2 312 966; 2 512 606; 3 393 210 bzw. in Kirk-Othmer, **Encyclopedia of Chemical Technology**, 3. Aufl., Vol. 18, Seiten 328 und 435 - Wiley & Sons (1982) beschrieben werden. Als Polyamide geeignete Polykondensate sind gleichfalls Poly(etheresteramide) bzw. Poly(etheramide). Derartige Produkte werden z. B. in DE-OSS 27 12 987, 25 23 991, 30 06 961 beschrieben.

Das Molekulargewicht (Zahlenmittel) der Polyamide liegt oberhalb von 5 000, vorzugsweise oberhalb von 10 000 - entsprechend einer relativen Viskosität (ηrel) im Bereich von 1,5 bis 2,8.

Die genannten Polyamide werden für sich oder in Gemischen eingesetzt. Die linearen, kristallinen Polyester (Komponente II. a) weisen nachstehende Grundstruktur auf 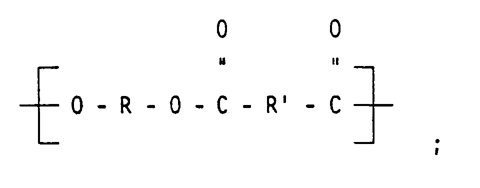 dabei stellt R einen divalenten verzweigten oder nichtverzweigten aliphatischen und/oder cycloaliphatischen Rest mit 2 bis 12, vorzugsweise 2 bis 8, C-Atomen in der Kohlenstoffkette und R' einen divalenten aromatischen Rest mit 6 bis 20, vorzugsweise 8 bis 12, C-Atomen im Kohlenstoffgerüst dar.

Als Beispiel für Diole seien Ethylenglykol, Trimethylenglykol, Tetramethylenglykol, Hexamethylenglykol, Neopentylglykol, Cyclohexandimethanol o. ä. genannt.

Bis zu 25 Mol-% des genannten Diols können durch ein zweites, bereits oben genanntes Diol oder durch ein Diol mit nachstehender allgemeiner Formel 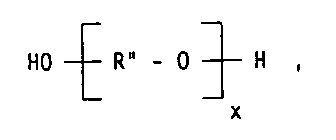 wobei R'' einen zweiwertigen Rest mit 2 bis 4 C-Atomen bedeutet und x einen Wert von 2 bis 50 annehmen kann, ersetzt sein.

Bevorzugt als Diole werden Ethylenglykol und Tetramethylenglykol eingesetzt.

Als aromatische Dicarbonsäure kommen z. B. Terephthalsäure, Isophthalsäure, 1.4-, 1.5-, 2.6- bzw. 2.7-Naphthalindicarbonsäure, Diphensäure, Diphenylether-4.4'-dicarbonsäure in Frage.

Bis zu 20 Mol-% dieser Dicarbonsäuren können durch aliphatische Dicarbonsäuren wie z. B. Bernsteinsäure, Maleinsäure, Fumarsäure, Sebacinsäure, Dodecandisäure u. a. ersetzt sein.

Die Herstellung der linearen, kristallinen Polyester gehört zum Stand der Technik (DE-OSS 24 07 155, 24 07 156; **Ullmanns Encyclopädie der technischen Chemie**, **4**. Aufl., Bd. 19, Seite 65 ff. - Verlag Chemie GmbH, Weinheim, 1980).

Die erfindungsgemäß eingesetzten Polyester weisen eine Viskositätszahl (J-Wert) im Bereich von 80 bis 240 cm³/g auf.

Die Polyamide (Komponente I.) und/oder die linearen, kristallinen Polyester (Komponente II. a.) können bis zu 40 Gew.-% andere Thermoplaste enthalten, sofern diese die Verbundfähigkeit nicht stören. Insbesondere seien hier Polycarbonat [H. Schnell, **Chemistry and Physics of Polycarbonates**, Interscience Publishers, New York (1981)], Acrylnitril/Styrol/Butadien-(Houben-Weyl, **Methoden der organischen Chemie,** Bd. 14/1, Georg Thieme Verlag Stuttgart, S. 393 - 406; **Ullmanns Encyclopädie der technischen Chemie**, 4. Auflage, Bd. 19, Verlag Chemie Weinheim (1981), S. 279 - 284), Acrylnitril/Styrol/Acrylat (**Ullmanns Encyclopädie der technischen Chemie**, 4. Auflage, Bd. 19, Verlag Chemie Weinheim (1981), S. 277 - 295), Acrylnitril/Styrol-Copolymerisat **(Ullmanns Encyclopädie der technischen Chemie**, 4. Auflage, Bd. 19, Verlag Chemie Weinheim (1981), S. 273 ff.) oder Polyphenylenether (DE-OSS 32 24 691 u. 32 24 692, US-PSS 3 306 874, 3 306 875 u. 4 028 341) genannt.

Sofern erforderlich können die Polyamide und/oder Polyester schlagzäh eingestellt werden. Geeignete Polymere sind z. B. Ethylen/Propylen- oder Ethylen/Propylen/Dien-Copolymere (EP-A-295 076), Polypentenylen, Polyoctenylen oder statistische bzw. blockartig aufgebaute Copolymere aus alkenylaromatischen Verbindungen mit aliphatischen Olefinen oder Dienen (EP-A-261 748). Weiterhin seien schlagzähmachende Kautschuke genannt: Kern/Schale-Kautschuke mit einem zähelastischen Kern aus (Meth)Acrylat-, Butadien- oder Styrol/Butadien-Kautschuk mit Glastemperaturen T_{g} < -10 °C, wobei der Kern vernetzt sein kann. Die Schale kann aus Styrol und/oder Methylmethacrylat und/oder weiteren ungesättigten Monomeren aufgebaut sein (DE-OSS 21 44 528, 37 28 685).

Als Komponente II. b. werden Verbindungen, Oligomere oder Polymere eingesetzt, deren Epoxidäquivalentgewicht (g Verbindung, Oligomer oder Polymer pro 1 mol Epoxid-Sauerstoff) zwischen 70 und 10 000 beträgt. Bevorzugt sind solche Stoffe, die mindestens zwei Epoxigruppen tragen.

Als für die Komponente II. b. geeignete Verbindungen seien beispielsweise genannt:
Polyglycidylether mehrwertiger Phenole, wie Brenzkatechin, Resorcin, Hydrochinon, 4,4'-Dihydroxydiphenylether, 4,4'-Dihydroxydiphenylmethan, 4,4'-dihydroxy-3,3'dimethyldiphenylmethan, von 4,4'-Dihydroxydiphenylcyclohexan, 4,4'-Dihydroxy-3,3'-dimethyldiphenylpropan, von 4,4'-Dihydroxydiphenyl, 4,4'-Dihydroxydiphenylsulfon, Tris-(4-hydroxyphenyl)methan oder von Polyphenolen, die durch Kondensation von Phenolen und langkettigen, mindestens zwei Halogenatome enthaltenden Halogenparafinen erhalten wurden (GB-PS 1 024 288).

Weiterhin kommen Polyepoxiverbindungen auf der Basis von aromatischen Aminen und Epichlorhydrin, z. B. N-Di-(2,3-epoxipropyl)anilin, N-di-epoxypropyl-4-amino-phenylglycidylether (GB-PSS 772 830 und 816 923) in Frage.

Außerdem können eingesetzt werden: Glycidylester mehrwertiger aromatischer, aliphatischer oder cycloaliphatischer Carbonsäuren, beispielsweise Phthalsäurediglycidylester, Adipinsäurediglycidylester, und Glycidylester von Umsetzungsprodukten aus 1 mol eines aromatischen oder cycloaliphatischen Dicarbonsäureanhydrids und 1/2 mol eines Diols bzw. 1/n mol eines Polyols mit n Hydroxylgruppen oder Hexahydrophthalsäureglycidylester, die ggf. mit Methylgruppen substituiert sein können. In gleicher Weise können Glycidylether mehrwertiger Alkohole, beispielsweise von 1,4-Butandiol, 1,4-Butendiol, Glycerin, Trimethylolpropan, Pentaerythrit und Polyethylenglykolen verwendet werden. Weitere brauchbare Polyepoxiverbindungen sind: Triglycidylisocyanurat, N,N'-Diepoxipropyloxamid.

Schließlich seien Epoxidierungsprodukte von mehrfach ungesättigten Verbindungen genannt, wie z. B. vegetabilischen Ölen und deren Umsetzungsprodukte; Epoxidierungsprodukte von Di- und Polyolefinen wie Butadien, Vinylcyclohexen, Polymerisaten und Mischpolymerisaten, die noch epoxidierbare Doppelbindungen enthalten, z. B. auf Basis von Polybutadien, Polyisopren, oder Styrol/Butadien-Copolymerisaten, außerdem von Polymerisaten von ungesättigten Monoepoxiden, z. B. aus Methacrylsäureglycidylester oder Allylglycidylether.

Bevorzugt werden Polyepoxiverbindungen eingesetzt, die durch Umsetzung von Epichlorhydrin mit Diphenylolpropan entstehen, sowie Triglycidylisocyanurat. Als Epoxigruppen aufweisende Polymere werden insbesondere Ethylen/Ethylacrylat/Methacrylsäureglycidylester-Copolymerisate eingesetzt.

Die Herstellung der Komponente II. erfolgt nach üblichen und bekannten Verfahren durch Schmelzemischen der Komponenten II. a. und II. b. in einem gut knetenden Mischaggregat, wie z. B. einem Doppelschneckenkneter, bei Temperaturen, die sich nach den Schmelzpunkten der Komponenten II. a. und II. b. richten, im allgemeinen bei Temperaturen zwischen 200 und 300 °C.

Der Komponente I. sowie Komponente II. können übliche Hilfs- und Zusatzstoffe wie z. B. Flammschutzmittel, Stabilisatoren, Verarbeitungshilfsmittel, Viskositätsverbesserer, Füllstoffe, Pigmente o. ä. zugefügt werden.

Die Fertigung der Mehrschichtverbunde kann ein- oder mehrstufig erfolgen.

Beim einstufigen Spritzgießverfahren bringt man die verschiedenen Schmelzen in einer Form zusammen und läßt das Formteil erkalten (Mehrkomponentenspritzguß).

Beim einstufigen Extrusionsverfahren werden in üblicher Weise die verschiedenen Schmelzen coextrudiert.

Bei den mehrstufigen Verfahren wird zunächst ein Formteil entweder aus der Komponente I. oder der Komponente II. hergestellt und dann mit den übrigen Komponenten beaufschlagt, was durch Pressen, Spritzgießen oder Extrudieren geschehen kann.

Die erfindungsgemäßen Mehrschichtverbunde weisen in hervorragendem Maße eine gute Beständigkeit sowie gute Sperrwirkung gegen Diffusion gegenüber chemischen Agenzien, Lösemitteln und Kraftstoffen auf. Ferner sind die beiden Schichten kraftschlüssig miteinander verbunden, so daß z. B. bei thermischer Ausdehnung oder Biegen des Rohres kein Abscheren der verschiedenen Schichten voneinander auftritt. Ferner ist es auch möglich, Werkstoffe herzustellen, welche die erfindungsgemäßen Mehrschichtverbunde mehrfach übereinander (alternierend) enthalten.-

Diese erfindungsgemäßen Mehrschichtverbunde finden bei Konstruktionsteilen vor allem im Bereich der Elektro-, Maschinenbau- und Automobilindustrie dort Verwendung, wo die Steifigkeit des Polyesters mit der Zähigkeit des Polyamids kombiniert werden soll oder wo die nachteiligen Eigenschaften des Polyamids wie mangelnde UV-Beständigkeit, nicht ausreichende Kratzfestigkeit oder schlechte Sperrwirkung durch eine Beschichtung aus Polyester ausgeglichen werden soll. Insbesondere finden sie auch Anwendung als Folien, vor allem als Lebensmittelverpackungsfolien, oder als Mehrschichtrohre, z. B. im Bereich der Kfz-Industrie.

Die in den Beispielen aufgeführten Ergebnisse wurden mit Hilfe nachstehender Meßverfahren bestimmt.

Die **Bestimmung der Lösungsviskosität** (Viskositätszahl J) **der Polyester** erfolgt in einer 0,5 Gew.-%igen Phenol/o-Dichlorbenzol-Lösung (Gewichtsverhältnis 1 : 1) bei 25 °C gemäß DIN 53 728/ ISO 1628/5 - Teil 5.

Die **Bestimmung der Lösungsviskosität** (rel. Viskosität η ᵣₑₗ) der **Polyamide** erfolgt unter Verwendung einer 0,5 Gew.-%igen m-Kresol-Lösung bei 25 °C gemäß DIN 53 727/ISO 307.

Zur **Bestimmung der Aminoendgruppen** wird 1 g der Komponente I. in 50 ml m-Kresol bei 25 °C gelöst. Die Lösung wird mit Perchlorsäure potentiometrisch titriert.

Für die **Bestimmung des Epoxid-Äquivalentgewichtes** wird eine ausreichende Menge Epoxigruppen aufweisende Verbindung in einem Dichlormethan/Eisessig-Gemisch (4 : 1 Vol. Tle) gelöst. Die Lösung wird mit einer etwa stöchiometrischen Menge an Tetra-n-butyl-ammoniumjodid versetzt und mit 0,1 N Perchlorsäure in Essigsäure unter Verwendung von Kristallviolett als Indikator titriert (DIN 53 188).

Die **Prüfung der mechanischen Trennbarkeit** an der Grenzfläche erfolgt mit einem Metallkeil (Schneidenwinkel: 5 Grad; Auflagegewicht: 2,5 kg), wobei versucht wird, die zu prüfende Materialgrenzschicht zu trennen. Erfolgt die Trennung an der Grenze zwischen den Komponenten, so ist die Haftung schlecht. Erfolgt die Trennung dagegen ganz oder teilweise innerhalb einer der beiden Komponenten, so liegt eine gute Anhaftung vor.

Mit Buchstaben gekennzeichnete Beispiele sind nicht erfindungsgemäß.-

### Beispiele

### A. Komponente I.

**A 1:** Polyamid 12 (ηᵣₑₗ: 1,6)
**A 2:** Polyamid 12 (ηᵣₑₗ: 1,9)
**A 3:** Polyamid 12 (ηᵣₑₗ: 2,1)
**A 4:** Polyamid 6.6 (ηᵣₑₗ: 1,9)
**A 5:** Polyamid 12 (ηᵣₑₗ: 2,1; modifiziert mit 7,5 Gew.Tln handelsüblichen Weichmacher pro 100 Gew.Tle Polyamid)
**A 6:** Polyamid 6 (ηᵣₑₗ: 2,01)
**A 7:** Polyamid 6.12 (ηᵣₑₗ: 1,8)
**A 8:** Polyamid 6.12 (ηᵣₑₗ: 1,8; 4 % der Endgruppen Aminoendgruppen; 5 mmol/kg Aminoendgruppen; 120 mmol/kg Carboxylendgruppen)
**A 11:** Polyamid 6.6 (ηᵣₑₗ: 1,81; 78 % der Endgruppen Aminogruppen; 105 mmol/kg Aminoendgruppen; 29 mmol/kg Carboxylendgruppen)

### B. Komponente II.

**B 1:** Homopolybutylenterephthaltat (J-Wert: 165 cm³/g - VESTODUR^{R} 3000)
**B 2:** Homopolybutylenterephthaltat (J-Wert: 145 cm³/g - VESTODUR^{R} 2000)
**B 3:** Homopolybutylenterephthaltat (POLYCLEAR^{R} TR 86)
**B 4:** Mischung aus
   a. 90 Gew.-% Homopolybutylenterephthalat (J-Wert: 165 cm³/g - VESTODUR 3000)
   b. 10 Gew.-% eines Epoxidharzes aus Epichlorhydrin und Diphenylolpropan mit einem mittleren Molekurlargewicht von 1400 g/mol und einem Epoxid-Äquivalentgewicht von 850 - 940 (EPIKOTE^{R} 1004, Fa. SHELL)

   Epoxigruppenkonzentration bezogen auf a. + b.: 111 mmol/kg.
**B 5:** Mischung aus
   a. 95 Gew.-% Homopolybutylenterephthalat (J-Wert: 165 cm³/g - VESTODUR 3000)
   b. 5 Gew.-% eines Epoxidharzes aus Epichlorhydrin und Diphenylolpropan mit einem mittleren Molekulargewicht von 1400 g/mol und einem Epoxid-Äquivalentgewicht von 850 - 940 (EPIKOTE^{R} 1004, Fa. SHELL)

   Epoxigruppenkonzentration bezogen auf a. + b.: 55,5 mmol/kg.
**B 6:** Mischung aus
   a. 97,5 Gew.-% Homopolybutylenterephthalat (J-Wert: 165 cm³/g - VESTODUR 3000)
   b. 2,5 Gew.-% Triglycidylisocyanurat

   Epoxigruppenkonzentration bezogen auf a. + b.: 260 mmol/kg.
**B 7: Mischung aus**
   a. 95 Gew.-% Homopolybutylenterephthalat (J-wert: 165 cm³/g - VESTODUR 3000)
   b. 5 Gew.-% eines Epoxidharzes aus Epichlorhydrin und Diphenylolpropan mit einem mittleren Molekulargewicht von 360 g/mol und einem Epoxid-Äquivalentgewicht von 180 - 190 (EPIKOTE^{R} 827, Fa. SHELL)

   Epoxigruppenkonzentration bezogen auf a. + b.: 270 mmol/kg.
**B 8:** Mischung aus
   a. 85 Gew.-% Homopolybutylenterephthalat (J-wert: 142 cm³/g - VESTODUR^{R} 2000)
   b. 15 Gew.-% Ethylen/Ethylacrylat/Glycidylmethacrylat (67 Gew.-% Ethylen, 26 Gew.-% Ethylacrylat und 7 Gew.-% Glycidylmethacrylat; Epoxid-Äquivalentgewicht: 1829)

   Epoxigruppenkonzentration bezogen auf a. + b.: 75 mmol/kg.
**B 9:** Mischung aus
   a. 87 Gew.-% Homopolybutylenterephthalat (J-Wert: 110 cm³/g - - VESTODUR^{R} 1000)
   b. 13 Gew.-% eines Pfropfcopolmeren aus 70 Gew.-% Ethylen/GlyGidylmethacrylat mit 30 Gew.-% aufgepfropftem Acrylnitril/Styrol-Copolymeren; Epoxid-Äquivalentgewicht: 1219.

   Epoxigruppenkonzentration bezogen auf a. + b.: 93,6 mmol/kg.

### C. Herstellung der Mehrschichtverbunde

Die Komponenten I. bzw. II. werden zunächst einzeln zu ca. 1 mm starken Preßplatten verarbeitet (Preßzeit: 10 min, Preßtemperatur: 10 °C oberhalb der Schmelz- bzw. Erweichungstemperatur). Es werden keine Formtrennmittel verwendet. Die Einzelplatten werden danach zu einem Mehrschichtverbund verpreßt. Die Preßtemperatur richtet sich dabei nach dem Material mit dem höchsten Schmelz- bzw. Erweichungspunkt. Die Preßzeit liegt bei 10 min.

**Tabelle 1**

| **Versuch** | **Schicht A** | **Schicht B** | **an Grenzfläche mechanisch trennbar - nach Lagerung** | | |
|---|---|---|---|---|---|
| | | | **bei 23 °C** | **bei 160 °C** | **in Kraftstoff**^{***)**} |
| A | A1 | B1 | ja | ja | ja |
| B | A2 | B1 | ja | ja | ja |
| C | A3 | B2 | ja | ja | ja |
| D | A4 | B3 | ja | ja | ja |
| E | A6 | B2 | ja | ja | ja |

| | | | | | |
|---|---|---|---|---|---|
| *) Lagerung bei 23 °C während 5 Tage in Normkraftstoff M 15 (42,5 Vol.-Tle. Isooctan, 42,5 Vol.-Tle. Toluol und 15 Vol.-Tle. Methanol). | | | | | |

**Tabelle 2**

| **Versuch** | **Schicht A** | **Schicht B** | **an Grenzfläche mechanisch trennbar - nach Lagerung** | | |
|---|---|---|---|---|---|
| | | | **bei 23 °C** | **bei 160 °C** | **in Kraftstoff*********)** |
| 1 | A1 | B4 | nein | nein | nein |
| 2 | A2 | B4 | nein | nein | nein |
| 3 | A3 | B4 | nein | nein | nein |
| 4 | A4 | B4 | nein | nein | nein |
| 5 | A5 | B4 | nein | nein | nein |
| 6 | A6 | B4 | nein | nein | nein |
| 7 | A7 | B4 | nein | nein | nein |
| 8 | A2 | B5 | nein | nein | nein |
| 9 | A5 | B5 | nein | nein | nein |
| 10 | A7 | B5 | nein | nein | nein |
| 11 | A5 | B6 | nein | nein | nein |
| 12 | A6 | B6 | nein | nein | nein |
| 13 | A7 | B7 | nein | nein | nein |
| 14 | A5 | B7 | nein | nein | nein |
| 15 | A8 | B8 | nein | nein | nein |
| 16 | A9 | B9 | nein | nein | nein |

| | | | | | |
|---|---|---|---|---|---|
| *) Lagerung bei 23 °C während 5 Tage in Normkraftstoff M 15 (42,5 Vol.-Tle. Isooctan, 42,5 Vol.-Tle. Toluol und 15 Vol.-Tle. Methanol). | | | | | |

## Patentansprüche

1. Thermoplastischer Mehrschichtverbund enthaltend
I. mindestens eine Schicht einer Formmasse auf Basis von Polyamid,
und
II. mindestens eine Schicht einer Formmasse auf Basis eines Gemisches aus
a. 98 bis 60 Gew.-% eines kristallinen thermoplastischen Polyesters mit nachstehender Grundstruktur 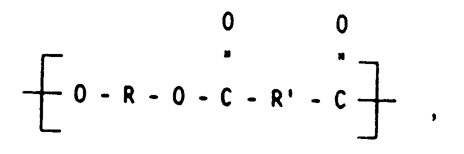 wobei R einen divalenten verzweigten oder nichtverzweigten aliphatischen und/oder cycloaliphatischen Rest mit 2 bis 12 C-Atomen in der Kohlenstoffkette und R' einen divalenten aromatischen Rest mit 6 bis 20 C-Atomen im Kohlenstoffgerüst darstellt
und
b. 2 bis 40 Gew.-% einer Epoxigruppen aufweisenden Verbindung,
wobei die der Komponente II. b. entstammenden Epoxigruppen in der Komponente II. in einer Konzentration zwischen 4 und 1 000 mmol/kg enthalten sind,
und eine gute Haftung zwischen den Schichten vorliegt.

2. Thermoplastischer Mehrschichtverbund nach Anspruch 1,
dadurch gekennzeichnet,
daß die Komponente II. eine Formmasse auf Basis eines Gemisches aus
a. 98 bis >70 Gew.-% eines linearen teilkristallinen Polyesters
und
b. 2 bis <30 Gew.-% einer Epoxigruppen aufweisenden Verbindung
darstellt.

3. Thermoplastischer Mehrschichtverbund nach Anspruch 1,
dadurch gekennzeichnet,
daß die Komponente II. eine Formmasse auf Basis eines Gemisches aus
a. 98 bis 85 Gew.-% eines linearen teilkristallinen Polyesters
und
b. 2 bis 15 Gew.-% einer Epoxigruppen aufweisenden Verbindung
darstellt.

4. Thermoplastischer Mehrschichtverbund nach den Ansprüchen 1 bis 3,
dadurch gekennzeichnet,
daß die der Komponente II.b. entstammenden Epoxigruppen in der Komponente II. in einer Konzentration zwischen 10 und 1 000 mmol/kg vorhanden sind.

5. Thermoplastischer Mehrschichtverbund nach den Ansprüchen 1 bis 3,
dadurch gekennzeichnet,
daß die der Komponente II.b. entstammenden Epoxigruppen in der Komponente II. in einer Konzentration zwischen 80 und 500 mmol/kg vorhanden sind.

6. Thermoplastischer Mehrschichtverbund nach Anspruch 1 enthaltend
I. eine Schicht einer Formmasse auf Basis von Polyamid, wobei mindestens 50 % aller im Polyamid vorhandenen Endgruppen Aminoendgruppen darstellen und die Aminoendgruppenkonzentration in der Komponente I. im Bereich von 30 bis 130 mmol/kg liegt,
und
II. eine Schicht einer Formmasse auf Basis eines Gemisches aus
a. 95 bis 60 Gew.-% eines linearen, kristallinen Polyesters
und
b. 5 bis 40 Gew.-% eines Epoxigruppen aufweisenden Polymeren,
wobei die der Komponente II. b. entstammenden Epoxigruppen in der Komponente II. in einer Konzentration zwischen 4 und 95 mmol/kg enthalten sind,
und eine gute Haftung zwischen den Schichten vorliegt.

7. Thermoplastischer Mehrschichtverbund nach Anspruch 6,
dadurch gekennzeichnet,
daß mindestens 70 % aller im Polyamid vorhandenen Endgruppen Aminoendgruppen darstellen.

8. Thermoplastischer Mehrschichtverbund nach Anspruch 6,
dadurch gekennzeichnet,
daß in der Komponente I. die Aminoendgruppenkonzentration im Bereich von 60 bis 110 mmol/kg liegt.

9. Thermoplastischer Mehrschichtverbund nach den Ansprüchen 6 bis 8,
dadurch gekennzeichnet,
daß die Komponente II. eine Formmasse auf Basis eines Gemisches aus
a. 95 bis >70 Gew.-% eines linearen, kristallinen Polyesters
und
b. 5 bis <30 Gew.-% eines Epoxigruppen aufweisenden Polymeren
darstellt.

10. Thermoplastischer Mehrschichtverbund nach den Ansprüchen 6 bis 8,
dadurch gekennzeichnet,
daß die Komponente II. eine Formmasse auf Basis eines Gemisches aus
a. 90 bis 80 Gew.-% eines linearen, kristallinen Polyesters
und
b. 10 bis 20 Gew.-% eines Epoxigruppen aufweisenden Polymeren
darstellt.

11. Thermoplastischer Mehrschichtverbund nach den Ansprüchen 6 bis 10,
dadurch gekennzeichnet,
daß die der Komponente II. b. entstammenden Epoxigruppen in der Komponente II. in einer Konzentration zwischen 6 und 75 mmol/kg enthalten sind, vorliegen.

12. Thermoplastischer Mehrschichtverbund nach den Ansprüchen 1 bis 11,
dadurch gekennzeichnet,
daß die der Komponente II.b. entsprechenden Verbindungen mindestens 2 Epoxigruppen aufweisen.

13. Thermoplastischer Mehrschichtverbund nach den Ansprüchen 1 bis 12,
dadurch gekennzeichnet,
daß als Komponente II. b. Verbindungen eingesetzt werden, die durch Umsetzen von Epichlorhydrin mit Diphenylolpropan erhalten werden.

14. Thermoplastischer Mehrschichtverbund nach den Ansprüchen 1 bis 12,
dadurch gekennzeichnet,
daß als Komponente II. b. Triglycidylisocyanurat eingesetzt wird.

15. Thermoplastischer Mehrschichtverbund nach den Ansprüchen 1 bis 12,
dadurch gekennzeichnet,
daß als Komponente II. b. Ethylen/Ethylacrylat/Glycidylmethacrylat-Copolymerisate eingesetzt werden.

16. Verwendung des thermoplastischen Mehrschichtverbundes nach den Ansprüchen 1 bis 15 in Formteilen.

17. Verwendung des thermoplastischen Mehrschichtverbundes nach Anspruch 16,
dadurch gekennzeichnet,
daß er in einem Formteil mehrfach eingesetzt ist.

18. Verwendung des thermoplastischen Mehrschichtverbundes nach den Ansprüchen 16 und 17 für Hohlprofile.

## Claims

1. A thermoplastic multilayer laminate containing
I. at least one layer of a moulding composition based on polyamide and
II. at least one layer of a moulding composition based on a mixture of
a. from 98 to 60% by weight of a thermoplastic crystalline polyester having the following basic structure 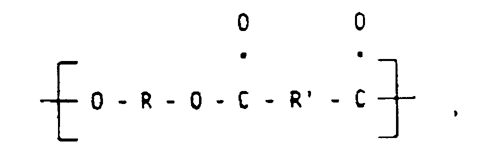 where R is a divalent, branched or unbranched, aliphatic and/or cycloaliphatic radical having 2 to 12 carbon atoms in the carbon chain, and R' is a divalent aromatic radical having 6 to 20 carbon atoms in the carbon skeleton,
and
b. from 2 to 40% by weight of a compound containing epoxide groups,
where the epoxide groups originating from component II.b. are present in component II. in a concentration of between 4 and 1000 mmol/kg,
and there is good adhesion between the layers.

2. A thermoplastic multilayer laminate according to claim 1, characterized in that a moulding composition based on a mixture of
a. from 98 to >70% by weight of a linear, partially crystalline polyester and
b. from 2 to <30% by weight of a compound containing epoxide groups
is employed as component II.

3. A thermoplastic multilayer laminate according to claim 1, characterized in that a moulding composition based on a mixture of
a. from 98 to 85% by weight of a linear, partially crystalline polyester and
b. from 2 to 15% by weight of a compound containing epoxide groups
is employed as component II.

4. A thermoplastic multilayer laminate according to any of claims 1 to 3, characterized in that the epoxide groups originating from component II.b. are present in component II. in a concentration of between 10 and 1000 mmol/kg.

5. A thermoplastic multilayer laminate according to any of claims 1 to 3, characterized in that the epoxide groups originating from component II.b. are present in component II. in a concentration of between 80 and 500 mmol/kg.

6. A thermoplastic multilayer laminate according to claim 1, containing
I. a layer of a moulding composition based on polyamide in which at least 50% of all the terminal groups present in the polyamide are amino terminal groups, and the concentration of amino terminal groups in component I. is in the range from 30 to 130 mmol/kg, and
II. a layer of a moulding composition based on a mixture of
a. from 95 to 60% by weight of a linear, crystalline polyester and
b. from 5 to 40% by weight of a polymer containing epoxide groups.
where the epoxide groups originating from component II.b. are present in component II. in a concentration of between 4 and 95 mmol/kg,
and there is good adhesion between the layers.

7. A thermoplastic multilayer laminate according to claim 6, characterized in that at least 70% of all the terminal groups present in the polyamide are amino terminal groups.

8. A thermoplastic multilayer laminate according to claim 6, characterized in that the concentration of amino terminal groups in component I. is in the range from 60 to 110 mmol/kg.

9. A thermoplastic multilayer laminate according to any of claims 6 to 8, characterized in that a moulding composition based on a mixture of
a. from 95 to >70% by weight of a linear, crystalline polyester and
b. from 5 to <30% by weight of a polymer containing epoxide groups
is employed as component II.

10. A thermoplastic multilayer laminate according to any of claims 6 to 8, characterized in that a moulding composition based on a mixture of
a. from 90 to 80% by weight of a linear, crystalline polyester and
b. from 10 to 20% by weight of a polymer containing epoxide groups
is employed as component II.

11. A thermoplastic multilayer laminate according to any of claims 6 to 10, characterized in that the epoxide groups originating from component II.b. are present in component II. in a concentration of between 6 and 75 mmol/kg.

12. A thermoplastic multilayer laminate composite according to any of claims 1 to 11, characterized in that the compounds corresponding to component II.b. contain at least 2 epoxide groups.

13. A thermoplastic multilayer laminate according to any of claims 1 to 12, characterized in that a compound obtained by reacting epichlorohydrin with diphenylolpropane is employed as component II.b.

14. A thermoplastic multilayer laminate according to any of claims 1 to 12, characterized in that triglycidyl isocyanurate is employed as component II.b.

15. A thermoplastic multilayer laminate according to any of claims 1 to 12, characterized in that ethylene/ethyl acrylate/glycidyl methacrylate copolymers are employed as component II.b.

16. The use of the thermoplastic multilayer laminate according to any of claims 1 to 15 in mouldings.

17. The use of the thermoplastic multilayer laminate according to claim 16, characterized in that it is employed more than once in one moulding.

18. The use of the thermoplastic multilayer laminate according to either of claims 16 and 17 for hollow profiles.

## Revendications

1. Composite multicouche thermoplastique contenant
I. au moîns une couche d'un mélange à mouler à base de polyamide, et
II. au moins une couche d'un mélange à mouler à base d'un mélange constitué
a. de 98 à 60 % en poids d'un polyester thermoplastique cristallin ayant la structure fondamentale suivante : 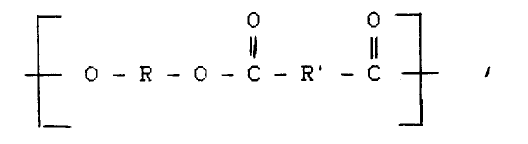 dans laquelle R est un radical aliphatique et/ou cycloaliphatique divalent, à chaîne droite ou ramifiée, ayant de 2 à 12 atomes de carbone dans la chaîne carbonée, et R' est un radical aromatique divalent ayant de 6 à 20 atomes de carbone dans le squelette carboné, et
b. de 2 à 40 % en poids d'un composé comportant des groupes époxy,
où les groupes époxy provenant du constituant II.b. sont contenus dans le constituant II à une concentration comprise entre 4 et 1000 mmoles/kg,
et où on a une bonne adhérence entre les couches.

2. Composite multicouche thermoplastique selon la revendication 1, caractérisé en ce que le constituant II est un mélange à mouler à base d'un mélange
a. de 98 à > 70 % en poids d'un polyester linéaire partiellement cristallin, et
b. de 2 à < 30 % en poids d'un composé comportant des groupes époxy.

3. Composite multicouche thermoplastique selon la revendication 1, caractérisé en ce que le constituant II est un mélange à mouler à base d'un mélange
a. de 98 à 85 % en poids d'un polyester linéaire partiellement cristallin, et
b. de 2 à 15 % en poids d'un composé comportant des groupes époxy.

4. Composite multicouche thermoplastique selon les revendications 1 à 3, caractérisé en ce que les groupes époxy provenant du constituant II.b. sont contenus dans le constituant II à une concentration comprise entre 10 et 1000 mmoles/kg.

5. Composite multicouche thermoplastique selon les revendications 1 à 3, caractérisé en ce que les groupes époxy provenant du constituant II.b. sont contenus dans le constituant II à une concentration comprise entre 80 et 500 mmoles/kg.

6. Composite multicouche thermoplastique selon la revendication 1, contenant
I. une couche d'un mélange à mouler à base de polyamide, où au moins 50 % de l'ensemble des groupes terminaux présents dans le polyamide sont des groupes terminaux amino, et la concentration des groupes terminaux amino dans le constituant I est comprise entre 30 et 130 mmoles/kg, et
II. une couche d'un mélange à mouler à base d'un mélange constitué
a. de 95 à 60 % en poids d'un polyester linéaire partiellement cristallin, et
b. de 5 à 40 % en poids d'un polymère comportant des groupes époxy.
où les groupes époxy provenant du constituant II.b. sont contenus dans le constituant II à une concentration comprise entre 4 et 95 mmoles/kg,
et où on a une bonne adhérence entre les couches.

7. Composite multicouche thermoplastique selon la revendication 6, caractérisé en ce qu'au moins 70 % de l'ensemble des groupes terminaux présents dans le polyamide sont des groupes terminaux amino.

8. Composite multicouche thermoplastique selon la revendication 6, caractérisé en ce que, dans le constituant I, la concentration des groupes terminaux amino est comprise dans l'intervalle de 60 à 110 mmoles/kg.

9. Composite multicouche thermoplastique selon les revendications 6 à 8, caractérisé en ce que le constituant II est un mélange à mouler à base d'un mélange constitué
a. de 95 à > 70 % en poids d'un polyester cristallin linéaire, et
b. de 5 à < 30 % en poids d'un polymère comportant des groupes époxy.

10. Composite multicouche thermoplastique selon les revendications 6 à 8, caractérisé en ce que le constituant II est un mélange à mouler à base d'un mélange constitué
a. de 90 à 80 % en poids d'un polyester cristallin linéaire, et
b. de 10 à 20 % en poids d'un polymère comportant des groupes époxy.

11. Composite multicouche thermoplastique selon les revendications 6 à 10, caractérisé en ce que les groupes époxy provenant du constituant II.b. sont présents dans le constituant II à une concentration comprise entre 6 et 75 mmoles/kg.

12. Composite multicouche thermoplastique selon les revendications 1 à 11, caractérisé en ce que les composés correspondants au constituant II.b. comportent au moins deux groupes époxy.

13. Composite multicouche thermoplastique selon les revendications 1 a 12, caractérisé en ce qu'on utilise comme constituant II.b. des composés que l'on obtient par la réaction de l'épichlorhydrine avec le diphénylolpropane.

14. Composite multicouche thermoplastique selon les revendications 1 à 12, caractérisé en ce qu'on utilise comme constituant II.b. l'isocyanurate de triglycidyle.

15. Composite multicouche thermoplastique selon les revendications 1 à 12, caractérisé en ce qu'on utilise comme constituant II.b. des copolymères éthylène/acrylate d'éthyle/méthacrylate de glycidyle.

16. Utilisation du composite multicouche thermoplastique selon les revendications 1 à 15 dans des objets moulés.

17. Utilisation du composite multicouche thermoplastique selon la revendication 16, caractérisé en ce qu'on l'utilise plusieurs fois dans un objet moulé.

18. Utilisation du composite multicouche thermoplastique selon les revendications 16 et 17 pour des profilés creux.
